Europäisches Patentamt

European Patent Office

Office européen des brevets

(19)

(11) Veröffentlichungsnummer: **0 321 445**
**A2**

(12) # EUROPÄISCHE PATENTANMELDUNG

(21) Anmeldenummer: 88890322.6

(22) Anmeldetag: 15.12.88

(51) Int. Cl.⁴: **C 04 B 28/16**
C 04 B 22/12, C 04 B 22/14

(30) Priorität: 18.12.87 AT 3366/87

(43) Veröffentlichungstag der Anmeldung:
21.06.89 Patentblatt 89/25

(84) Benannte Vertragsstaaten:
BE CH DE ES GR IT LI LU NL

(71) Anmelder: **TERRANOVA-INDUSTRIE GESELLSCHAFT M.B.H.**
**Schwarzenbergplatz 16**
**A-1011 Wien  (AT)**

(72) Erfinder: **Kukla, Norbert**
**Göllnergasse 33**
**A-1030 Wien  (AT)**

(74) Vertreter: **Piso, Eberhard, Dr. et al**
**Patentanwälte Dipl.-Ing. Herbert C.E. Krause Dr.**
**Eberhard Piso Gluckgasse 1 Postfach 328**
**A-1015 Wien 1  (AT)**

(54) **Zusatzstoff zu Anhydrit enthaltenden Baustoffmischungen.**

(57) Zusatzstoff zu Anhydrit als hydraulisches Bindemittel und Sand als Magerungsmittel enthaltenden, zementfreien Baustoffmischungen, wobei er ein aluminium- oder siliciumhaltiges Fluorid oder ein Aluminiumhydroxidsulfatkomplex und mit dem Zusatzstoff erhaltene zemenffreie Baustoffmischung ist.

EP 0 321 445 A2

**Beschreibung**

Anhydrit gewinnt als Bindemittel für Baustoffe immer mehr an Bedeutung. Besonders gilt das auf dem Gebiet der Estriche und Verputzmörtel. So ist z.B. in der EP-A 63232 eine selbstnivellierende Mörtelmischung beschrieben, die synthetischen Anhydrit und Zement als hydraulische Bindemittel, verschiedene Zusatzstoffe und natürlichen Anhydrit mit normaler Kornverteilung und einem Maximalkorn zwischen 0,8 und 1,8 mm als Magerungsmittel enthält.

In der AT-PS 280 873 wird der Vorschlag gemacht, Baustoffe auf Basis von Anhydritbinder und Zuschlagstoffen (Sand) durch Zusatz sulfit- oder sulfonsäuremodifizierter Harze auf der Basis eines Amino-s-triazins wasserfest zu machen.

Estrich wird bisher meist mit Zement als Bindemittel verarbeitet. Der Nachteil dabei ist, daß Zement ein relativ hohes Schwindmaß hat, der Estrich daher, um ein starkes Schwinden zu vermeiden mit möglichst wenig Wasser und steif eingebracht werden muß, was sehr arbeitsaufwendig ist.

Wird für Putzmörtel Kalk und Zement als Bindemittel verwendet steht man auch hier vor dem Problem des hohen Schwindmaßes dieser beiden Bindemittel. Setzt man anstelle dessen Gips ein, so kann man wohl den Nachteil des hohen Schwindens und damit die Rißanfälligkeit vermeiden. Gips ist dafür aber relativ stark wasserempfindlich und gipsgebundene Mörtel sind daher nur für Innenräume, in denen keine Feuchtigkeitsbelastung vorliegt, geeignet.

Anhydrit als Bindemittel hat gegenüber Kalk und Zement als Bindemittel den Vorteil, daß er ein sehr geringes Schwindmaß aufweist, gegenüber Gips wiederum den Vorteil, daß die Wasserfestigkeit von Anhydrit höher ist.

Von ganz besonderer Bedeutung ist Anhydrit als Bindemittel bei der Herstellung von Estrich. Hier besteht der Wunsch, möglichst große Flächen ohne Trennfuge und unabhängig von den geometrischen Abmessungen verlegen zu können, ohne daß die Gefahr von Schwindrissen besteht; außerdem soll die Verlegung möglichst wenig arbeitsaufwendig und schnell vor sich gehen können. Für die Herstellung von Estrichen werden daher gut fließfähige Mischungen gewünscht, die sich möglichst selbst nivellieren. Solche Estrichmischungen sind bisher nur mit Anhydrit als Bindemittel möglich. Um die Fließfähigkeit zu erreichen, werden der Estrichmischung verflüssigende Zusätze, z.B. wasserlösliche Melaminharze, zugesetzt. Um ein Absetzen der Zuschlagstoffe in der flüssigen Estrichmischung zu verhindern, werden zusätzlich die Sedimentation behindernde Stoffe, insbesondere Celluloseäther, wie sich auch in der Mörtelindustrie seit langem bekannt sind, verwendet. Diese Zusatzmittel wirken aber verdickend, so daß dadurch der Wasserbedarf der Mischung wiederum erhöht wird. Außerdem besitzen Celluloseäther eine hohe Wasserretention, wodurch der Austrocknungsvorgang verzögert und außerdem die Wasserfestigkeit des Baustoffes negativ beeinflußt wird.

Anhydrit benötigt, um abzubinden, Anreger. Es ist aber dieser Abbindevorgang nicht genau steuerbar, d.h. daß der Abbindevorgang nicht exakt vorhersehbar, zu unterschiedlichen Zeitpunkten einsetzen kann und auch unterschiedlich schnell ablaufen kann. Außerdem ist der Abbindeprozeß sehr stark von den Umgebungsbedingungen, insbesondere von Temperatur und Luftfeuchtigkeit, abhängig.

Sehr stark beeinflußt wird das Abbinden des Anhydrits auch von der mineralogischen Zusammensetzung des für die Herstellung des Estrichs verwendeten Sandes. Es ist daher der jeweils eingesetzte Sand vor seiner Verwendung genau zu prüfen und es müssen viele Sande als nicht geeignet ausgeschieden werden. Insbesondere Anhydrite aus natürlichen Vorkommen sind für die mineralogische Zusammensetzung des Sandes empfindlich.

Es konnte nun gefunden werden, daß durch Zusatz bestimmter anorganischer Verbindungen zu Baustoffmischungen mit Anhydrit als Bindemittel Mörtel und Estrichmischungen erhalten werden können, die unabhängig von den Umgebungsbedingungen und von der mineralogischen Zusammensetzung des Sandes, gezielt gleichmäßig abbinden, und es auch bei dünnflüssigen selbstnivellierenden Estrichmischungen zu keinem Absetzen der Zuschlagstoffe kommt. Außerdem wird die Festig keit ebenso wie die Wasserfestigkeit dieser Baustoffmischungen durch diese Zusätze erhöht.

Erfindungsgemäß wird daher ein Zusatzstoff zu Anhydrit als hydraulisches Bindemittel und Sand als Magerungsmittel enthaltenden, zementfreien Baustoffmischungen vorgeschlagen, der dadurch gekennzeichnet ist, daß er ein aluminium-oder siliciumhaltiges Fluorid oder ein Aluminiumhydroxidsulfatkomplex ist.

Stellt man Baustoffmischungen aus Sand, Anhydrit, Anreger und Wasser her und setzt ein Salz der genannten Verbindungen in einer Menge von 0,05 bis 4, vorzugsweise 0,05 bis 3,0% auf Anhydrit bezogen zu, so läßt sich der Abbindeprozeß sehr genau einstellen. Bei Estrichmischungen ist wie vorerwähnt außerdem festzustellen, daß es trotz hoher Fließfähigkeit der Mischungen zu keinem Absetzen des Sandes in der Mischung kommt. Die Festigkeit der Mischung wird, wie aus nachstehenden Tabellen ersichtlich ist, gesteigert, ebenso steigt die Wasserfestigkeit. Bevorzugte Zusatzstoffe sind erfindungsgemäß z.B. Pachnolith, Magnesiumsilicofluorid, Kryolith bzw. ein in Wasser unlöslicher, in Säuren und Alkalien löslicher Aluminiumhydroxidsulfatkomplex. Bei deren Einsatz kann entweder Anmachwasser gespart werden, wodurch die Festigkeit der Baustoffmischung erhöht und die Austrocknungszeit derselben reduziert werden kann, oder aber es kann bei gleicher Anmachwassermenge die Fließfähigkeit der Mischung erhöht werden, ohne daß es zu einem verstärkten Absetzen des Zuschlagstoffes in der Mischung kommt. Dieser letztgenannte Effekt ist von besonderer Bedeutung bei der Herstellung von Fließestrichen. Zur Erläuterung der Erfindung werden nachstehend einige Ausführungsbeispiele gegeben:

Beispiel 1:
100,0 G.-T. Anhydrit
1,0 G.-T. Kaliumsulfat
0,6 G.-T. Ligninsulfonat
0,5 G.-T. Pachnolith (NaCaAlF$_6$)
werden innig gemischt. An der Baustelle wird dieses Gemisch mit
150 - 170 G.-T. Estrichsand, Körnung 0-4 mm und
ca. 28 G.-T. Wasser
in einem Mörtelmischer gemischt und auf die zu verlegenden Estrichflächen gepumpt. Die Mischung ist so flüssig, daß sie von alleine verfließt.

Eine gleiche Mischung ohne Zusatz von Pachnolith hergestellt ist weniger flüssig, sodaß sie nicht von alleine verfließt,sondern durch Verteilen mit einem geeigneten Rechen oder ähnlichem Werkzeug verteilt werden muß. Die Festigkeitswerte dieser Mischungen betragen:

| | mit Pachnolith | ohne Pachnolith |
|---|---|---|
| Druckfestigkeit | | |
| nach 28 Tagen Normalklima | 60 N/mm$^2$ | 50 N/mm$^2$ |
| nach 28 Tagen Normalklima und 7 Tagen Wasserlagerung | 40 N/mm$^2$ | 25 N/mm$^2$ |
| Biegezugfestigkeit | | |
| nach 28 Tagen Normalklima | 9 N/mm$^2$ | 7 N/mm$^2$ |
| Nach 28 Tagen Normalklima und 7 Tagen Wasserlagerung | 5,5 N/mm$^2$ | 3,5 N/mm$^2$ |

Beispiel 2:
100,0 G.-T. Anhydrit
180,0 G.-T. Dolomitsand, Körnung 0-3mm
werden an der Baustelle ein Gemisch bestehend aus
1,2 G.-T. Kaliumsulfat
0,7 G.-T. Melaminharz
3,0 G.-T. basischer Aluminiumsulfatkomplex (sehr vereinfachte Bruttoformel Al$_6$ (OH)$_{16}$SO$_4$.5 H$_2$O) und
27,0 G.-T. Wasser
zugesetzt.

Diese Mischung wird ebenfalls wieder am besten mit einer Mörtelpumpe gemischt und auf die zu verlegenden Flächen aufgebracht.

| | mit Aluminiumsulfatkomplex | ohne Aluminiumsulfatkomplex |
|---|---|---|
| Druckfestigkeit | | |
| nach 28 Tagen Normalklima | 52 N/mm$^2$ | 39 N/mm$^2$ |
| nach 28 Tagen Normalklima und 7 Tagen Wasserlagerung | 38 N/mm$^2$ | 22 N/mm$^2$ |
| Biegezugfestigkeit | | |
| nach 28 Tagen Normalklima | 7,5 N/mm$^2$ | 5 N/mm$^2$ |
| Nach 28 Tagen Normalklima und 7 Tagen Wasserlagerung | 5,0 N/mm$^2$ | 3 N/mm$^2$ |

Beispiel 3:
100,00 G.-T. Anhydrit
0,05 G.-T. Magnesiumsilicofluorid
1,40 G.-T. Kaliumsulfat
0 ,50 G. -T. Melaminharz
0,20 G.-T. Ligninsulfat
120,00 G.-T. Quarzsand, Körnung 0-3 mm
werden mit
27 G.-T. Wasser
in einer Mörtelpumpe gemischt. Diese Mischung wird als Estrich verlegt.

| | mit Mg-Silicofluorid | ohne Mg-Silicofluorid |
|---|---|---|
| Druckfestigkeit | | |
| nach 28 Tagen Normalklima | 66 N/mm$^2$ | 54 N/mm$^2$ |
| nach 28 Tagen Normalklima und 7 Tagen Wasserlagerung | 45 N/mm$^2$ | 20 N/mm$^2$ |
| Biegezugfestigkeit | | |
| nach 28 Tagen Normalklima | 9,5 N/mm$^2$ | 7,0 N/mm$^2$ |
| Nach 28 Tagen Normalklima und 7 Tagen Wasserlagerung | 5,5 N/mm$^2$ | 3,0 N/mm$^2$ |

Beispiel 4:
100,0 G.-T. Anhydrit
160,0 G.-T. Quarzsand, Körnung 0-4 mm

1,0 G.-T. Kaliumsulfat
0,7 G.-T. Zinksulfat
0,1 G.-T. Kryolith (Na$_3$AlF$_6$)
werden mit
27 G.-T. Wasser
in einem Mörtelmischer gemischt und mit der Mörtelpumpe als Estrich verlegt.

|  | mit Kryolith | ohne Kryolith |
|---|---|---|
| Druckfestigkeit |  |  |
| nach 28 Tagen Normalklima | 59 N/mm$^2$ | 45 N/mm$^2$ |
| nach 28 Tagen Normalklima und 7 Tagen Wasserlage-rung | 38 N/mm$^2$ | 22 N/mm$^2$ |
| Biegezugfe-stigkeit |  |  |
| nach 28 Tagen Normalklima | 8,5 N/mm$^2$ | 7,0 N/mm$^2$ |
| Nach 28 Tagen Normalklima und 7 Tagen Wasserlage-rung | 4,5 N/mm$^2$ | 2,3 N/mm$^2$ |

Beispiel 5:
180,0 G.-T. Anhydrit
100,0 G.-T. Kalkhydrat
720,0 G.-T. Dolomitsand, Körnung 0,3-1 mm
1,0 G.-T. Kaliumsulfat
1,5 G.-T. Methylcellulose
0,2 G.-T. Luftporenbildner (Fettalkoholsulfonat)
1,5 G.-T. Magnesiumsilicofluorid
werden innig miteinander vermischt. Diese Mischung wird in einer Verputzmaschine mit Wasser gemischt und auf eine Ziegelwand aufgebracht. Das Ausbreitmaß dieser Mischung beträgt 17,5 cm. Die Mischung erreicht nach 28 Tagen eine Druckfestigkeit von 1,8 N/mm$^2$ und eine Biegezugfestigkeit von 0,65 N/mm$^2$.

Weitere Ausführungsmöglichkeiten für die Herstellung von Verputzmörteln sind:

Beispiel 6:
200,0 G.-T. Anhydrit
90,0 G.-T Kalkhydrat
00,0 G.-T. Dolomitsand 0-0,8 mm
4,0 G.-T. Zinksulfat
1,8 G.-T. Methylcellulose
0,25 G.-T. Luftporenbildner
0,12 G.-T. Kryolith (Na$_3$AlF$_6$)

Beispiel 7:
250,0 G.-T. Anhydrit
50,0 G.-T. Kalkhydrat
710,0 G.-T. Dolomitsand
2,0 G.-T. Kaliumsulfat
1,0 G.-T. Zinksulfat
2,0 G.-T. Methylcellulose

0,2 G.-T. Luftporenbildner
7,4 G.-T. basischer Aluminiumsulfatkomplex

Beispiel 8:
250,0 G.-T. Anhydrit
50,0 G.-T. Kalkhydrat
710,0 G.-T. Dolomitsand
2,0 G.-T. Kaliumsulfat
1,0 G.-T. Zinksulfat
2,0 G.-T. Methylcellulose
0,2 G.-T. Luftporenbildner
0,18 G.-T. Pachnolith (NaCaAlF$_6$)

**Patentansprüche**

1. Zusatzstoff zu Anhydrit als hydraulisches Bindemittel und Sand als Magerungsmittel enthaltenden, zementfreien Baustoffmischungen, dadurch gekennzeichnet, daß er ein aluminium- oder siliciumhaltiges Fluorid oder ein Aluminiumhydroxidsulfatkomplex ist.

2. Zusatzstoff nach Anspruch 1, dadurch gekennzeichnet, daß er Pachnolith (NaCaAlF$_6$) ist.

3. Zusatzstoff nach Anspruch 1, dadurch gekennzeichnet, daß er Magnesiumsilicofluorid ist.

4. Zusatzstoff nach Anspruch 1, dadurch gekennzeichnet, daß er Kryolith (Na$_3$AlF$_6$) ist.

5. Zusatzstoff nach Anspruch 1, dadurch gekennzeichnet, daß er ein in Wasser unlöslicher, in Säuren und Alkalien löslicher Aluminiumhydroxidsulfatkomplex ist.

6. Zementfreie Baustoffmischung, die Anhydrit als hydraulisches Bindemittel, Anregersalz, Wasser, Sand als Magerungsmittel und gegebenenfalls Kalkhydrat als zweites hydraulisches Bindemittel enthält, dadurch gekennzeichnet, daß sie einen Zusatzstoff nach einem der Ansprüche 1 bis 5 in einer Menge von 0,05 bis 4 Gew.-Teilen, bezogen auf 100 Gew.-Teile Anhydrit enthält.